# EUROPEAN PATENT SPECIFICATION

(11) **EP 2 127 699 B1**
(45) Date of publication and mention of the grant of the patent: **12.10.2011**
(21) Application number: 08157276.0
(22) Date of filing: 30.05.2008
(51) Int. Cl.: A62B 7/08, A62B 7/14, A62B 21/00, B64D 11/00

(54) **Oxygen breathing device having oxygen buffer**
Sauerstoffatmungsvorrichtung mit Sauerstoffpuffer
Dispositif respiratoire à oxygène disposant d'un réservoir tampon de l'oxygène

(43) Date of publication of application: 02.12.2009
(73) Proprietor: INTERTECHNIQUE, 78373 Plaisir Cédex (FR)
(72) Inventor: Rittner, Wolfgang, 23623, Siblin (DE); Meckes, Rüdiger, 23919, Berkenthin (DE); Boomgarden, Günter, 23684, Scharbeutz (DE); Niedostatek, Mark, 21279, Wenzendorf (DE)
(74) Representative: Eisenführ, Speiser & Partner

(56) References cited:
- WO-A-87/01949
- US-A- 3 516 797
- US-A- 3 981 300
- US-A- 4 230 667

## Description

The invention relates to an oxygen breathing device, in particular for providing oxygen to passenger or crew of an aircraft, the device comprising a chemical oxygen source, wherein oxygen is stored in chemically bound form, a first oxygen flow path connecting the chemical oxygen source to a flow control valve and a second oxygen flow path connecting the flow control valve to at least one oxygen outflow port, wherein the flow control valve is adapted to control the oxygen pressure at the oxygen outflow port. A further aspect of the invention is a method for supplying oxygen to a passenger or crew member.

Oxygen breathing devices of the aforementioned type are used for a number of purposes where temporary or permanent supply of oxygen to a human person is necessary. A particular field of application of such oxygen breathing devices is the field of aircraft, wherein a pressure drop within an aircraft flying at high altitude may make it necessary to supply supplemental oxygen to the passengers and the crew members to ensure sufficient oxygen supply to these persons. Usually, an oxygen breathing device is provided for each crew member and passenger or a group thereof and is usually arranged above the passenger. In case of an emergency, such oxygen breathing device is activated, for example automatically by a cabin pressure monitoring system or manually by a crew member, whereafter an oxygen mask connected via a hose to an oxygen source falls from above the passenger downwards and can be used by the passenger. The flow of oxygen may be started automatically by activation of the system or by the crew member or may be activated by a particular action undertaken by the passenger, e.g. by pulling the mask towards himself to thus activate the device by a pulling force transferred via the hose guiding the oxygen flow or an additional lanyard coupled to the oxygen mask.

Oxygen breathing devices having a chemical oxygen source are particularly attractive for a number of applications since they provide high reliability and are maintenance-free. Such chemical oxygen sources comprise chemical oxygen cores which are adapted to create a complete oxygen descent profile for a person like a passenger or crew member. By this, the oxygen required by a person in certain, predetermined flight conditions or flight profiles can be provided in each flight condition to the person.

However, a particular problem of such oxygen breathing devices having a chemical oxygen generator lies in the fact that specific flight conditions may require other profiles of the amount of oxygen delivered over time. In particular, in a condition where an aircraft travels at low altitude, only a small flow of oxygen is required, whereas at high altitudes a large flow of oxygen is required.

It is known to provide chemical oxygen generators which are capable to provide large amounts of oxygen over a long period of time. Oxygen breathing devices comprising such large oxygen generators are able to supply oxygen to a person in each specific flight condition, whereby the oxygen flow must be reduced using a flow control valve at low altitude flight conditions. However, such oxygen breathing devices are heavy and bulky and thus provide considerable drawbacks in modern aircraft design. Further, pressure increase due to permanent flow reduction may adversely affect the chemical reaction in the oxygen generator.

In order to provide oxygen to a passenger or crew member in all possible emergency situations occurring in aircraft, it is known to provide oxygen breathing devices which are capable to produce a sufficient amount of oxygen even at very low or very high ambient temperatures and ambient pressure. Generally, such oxygen breathing devices will fulfil the requirements since they are designed to supply oxygen at any possible extreme situation. However, such designed breathing devices are rather heavy since their design must be adapted to fulfil the requirements in the worst situation. For example, the breathing device must be designed to produce sufficient oxygen for providing it to a passenger or crew member when flying at very high altitude thus in a very low ambient pressure situation. However, in case that such oxygen generator is activated in a low level flight situation, the oxygen generator will produce far too much oxygen.

It is known to reduce the oxygen flow in such a situation to an oxygen flow rate required by the passenger or crew member in the specific situation at low level flight altitude. However, such flow reduction will result in a significant pressure increase and thus such oxygen breathing devices must be designed to be capable to handle such high pressure within the oxygen generator and the oxygen flow tubes thus resulting in increased weight of the system.

It is further known to deliver a high amount of oxygen to a passenger in such low level flight condition. It is generally uncritical to supply more oxygen to a person than actually required as long as the amount of oxygen delivered to the person is below a specific toxic oxygen flow rate. By this, the pressure within the system may be kept on a reasonable level but a specific drawback of such solution is that the time period for supplying oxygen to the person is significantly shortened.

US 3,981,300, which is considered being the closest prior art showing the features of the preamble of the independent claim 1, discloses an oxygen supply system for aircraft including a plurality of crew stations each having an oxygen mask. All crew stations are supplied through an oxygen distributions system including a shut off valve and a pressure reducer. The inlet to the pressure reducer is connected to an oxygen tank reservoir which is fed by a plurality of chemical oxygen generators.

It is a first object of the invention to provide an oxygen breathing device which is capable to supply a person like a passenger or crew member of an aircraft in a variety of different situations like flight profiles with a specific rate of oxygen as required and which is of light weight construction.

It is a further object of the invention to provide an oxygen breathing device for supplying oxygen to a person like a passenger or crew member of an aircraft which is capable to supply the oxygen over a long period of time when flying at low altitude.

It is a still further object of the invention to provide an oxygen breathing device for supplying oxygen to a person like a passenger or crew member of an aircraft capable to supply the person in a low ambient pressure situation.

According to the invention as claimed in claim 1 and 10, an oxygen breathing device as described in the introductory portion is provided, the oxygen breathing device having an oxygen buffer connected to the first oxygen flow path. According to the invention, an oxygen breathing device is provided having a chemical oxygen source. In the chemical oxygen source, one or more agents are provided which are adapted to produce oxygen in a chemical reaction. The chemical reaction is started in case of an emergency situation, wherein it is required to supply oxygen to a person like a passenger or crew member of an aircraft. The chemical oxygen generator is preferably adapted to supply such oxygen according to a predetermined descent profile, wherein an aircraft may reduce its flight level from a high altitude to a low altitude within short time in case of an emergency situation. The chemical oxygen source may be adapted to supply exactly such an amount of oxygen as required by the passenger when following such descent profile. In an alternative version, the chemical oxygen source may be adapted to provide a specific additional amount of oxygen than actually required when following such descent profile. In such case, the oxygen delivered from the oxygen source is more than the amount required by the passenger or crew member in the actual flight condition.

The oxygen buffer is adapted to temporarily store an amount of oxygen. Preferably, the oxygen buffer is empty in the state of the oxygen breathing device as delivered. In certain applications, a small amount of oxygen may be provided within the oxygen buffer, i.e. in applications wherein an additional amount of oxygen is to be provided within the whole oxygen breathing device. Such small amount may serve to initially supply oxygen to the passenger or crew member as long as the chemical reaction is not as effective to produce sufficient oxygen.

In certain applications it may even be preferable that the oxygen buffer is completely filled with oxygen in the state as delivered and is only adapted to serve as oxygen buffer after a certain amount of oxygen is delivered from the oxygen buffer to a passenger or crew member. In such case, the oxygen breathing device may be started by first activating an oxygen flow from the oxygen buffer to a passenger or crew member and after a predetermined amount of oxygen is delivered from the oxygen buffer or the oxygen buffer is substantially emptied, the chemical oxygen source is activated and oxygen is provided from the chemical oxygen source to the passenger or crew member.

However, it is preferred that the oxygen buffer is at least partially adapted to store oxygen produced in the chemical oxygen source in the state as delivered, i.e. the oxygen buffer is not completely filled in such state.

Any oxygen produced within the chemical oxygen source and not required by the passenger or crew member, e.g. oxygen produced from a chemical oxygen source adapted for a descent profile from high to low altitude when being started at low altitude or oxygen produced from an oxygen source adapted to provide an additional amount of oxygen over such descent profile when started at high or low altitude can be temporarily stored in the oxygen buffer according to the invention. By this, it is neither required to adapt the chemical oxygen source and the oxygen tubes to a potential high pressure within the system produced by a significant reduction of the flow rate in a high oxygen production state. Nor it is required to provide a higher rate of oxygen to the passenger or crew member than required to avoid such high pressure within the system thus not sacrificing the possibility of long term oxygen supply.

According to the invention, any additional amount of oxygen which is produced within the chemical oxygen source but not required by the passenger or crew member can be temporarily stored within the oxygen buffer. Such temporarily stored oxygen can be released from the oxygen's buffer and provided to the passenger or crew member at a later stage of the oxygen supply and by this it is achieved that no oxygen is wasted during operation of the oxygen breathing device and the oxygen breathing device is adapted to supply oxygen to a passenger in each flight profile condition, including flying at high altitude or low altitude and descending from high altitude to low altitude or even ascending from low altitude to high altitude.

The oxygen buffer is connected to said first oxygen flow path via a first check valve adapted to direct oxygen from the chemical oxygen source to the oxygen buffer if the pressure within the first oxygen flow path and/or the pressure difference between the oxygen buffer and the first oxygen flow path exceeds a predetermined limit. Such first check valve may be a flow valve having a valve body which is pressed against a valve seat with a spring and being such biased to open at a predetermined pressure difference or absolute pressure on the valve side connected to the first oxygen flow path. By this, it is ensured that the oxygen provided by the chemical oxygen source is primarily provided to the flow control valve and thus to the passenger or crew member and only in case that an additional amount of oxygen is produced within the chemical oxygen source, such amount may induce an increase of pressure or pressure difference which acts to open the first check valve and thus allows filling of the oxygen buffer with such additional oxygen. This further ensures that a predetermined pressure level is maintained in the first oxygen flow path and thus allows save operation of the flow control valve. This is of particular advantage since a number of flow control valve designs require a predetermined pressure level on the pressure side to ensure save operation and flow control.

According to a first preferred embodiment, the oxygen buffer is a pressure tank. A pressure tank according to this preferred embodiment can easily be adapted to the pressure occurring in operation of the system and its volume can be dimensioned such that the pressure tank is adapted to store a maximum amount of oxygen which may be additionally produced by the chemical oxygen source if started at low altitude and proceeding to fly at such low altitude or ascending to a high altitude.

It is particularly preferred that the first check valve is adapted to direct oxygen to the oxygen buffer depending on an absolute pressure level in the first oxygen flow path. However, in particular embodiments, the first check valve may be adapted to open depending on a pressure difference between the pressure in the first oxygen flow path and the ambient pressure or a pressure difference between the pressure in the first oxygen flow path and the pressure within the oxygen buffer.

This embodiment may be further improved in that the first check valve is adapted to shut off if the pressure within the oxygen buffer exceeds a certain limit. With such preferred embodiment it can be ensured that the pressure within the oxygen buffer does not exceed a predetermined limit thus allowing to design the oxygen buffer in a light weight construction. The shut off-function is preferably integrated into the first check valve but it is to be understood that the function may be provided by a separate valve as well.

According to a still further embodiment, the oxygen buffer is connected to said first oxygen flow path via a second check valve adapted to direct oxygen from the oxygen buffer to the first oxygen flow path if the pressure within the first oxygen flow path and/or the pressure difference between the oxygen buffer and the first oxygen flow path is below a predetermined limit. With this embodiment, a constant flow of oxygen from either the chemical oxygen source, the oxygen buffer or both can be provided to the passenger or crew member. This is achieved by selectively providing oxygen from the chemical oxygen source and/or the oxygen buffer. In particular, oxygen from the oxygen buffer is provided to the first oxygen flow path in case that the oxygen provided by the chemical oxygen source is not sufficient for supplying the passenger or crew member with the required amount of oxygen. Thus, the second check valve may be particularly adapted to supply oxygen to the first oxygen flow path if the oxygen pressure or the total pressure within the first oxygen flow path is below the oxygen pressure or total pressure, respectively, within the oxygen buffer.

Still further, it is preferred that the oxygen buffer is connected to said second oxygen flow path via a safety check valve adapted to direct oxygen from the oxygen buffer to the second oxygen flow path if the pressure within the oxygen buffer exceeds a predetermined limit. With this embodiment, a simple and light weight safety mechanism is provided to avoid excessive pressure within the system. According to the embodiment, excessive oxygen which may cause such excessive pressure situations is supplied to the passenger or crew member via a safety check valve and a safety oxygen flow path. As discussed beforehand, the supply of excessive oxygen to the passenger or crew member is not critical as long as the amount of oxygen delivered is below a certain toxic flow rate. Thus, the safety check valve may be adapted to only allow an oxygen flow which is below such toxic flow rate. This embodiment allows to design the whole system in a light weight construction since an overpressure situation can be safely avoided by releasing the excessive oxygen which may cause such overpressure situation to the passenger or crew member and bypassing the flow control valve with such excessive oxygen.

According to a still further preferred embodiment, a control unit is provided for controlling the flow control valve. Such control unit is particularly useful for exactly controlling the oxygen flow provided to the passenger or crew member and to additionally initiating oxygen production within the chemical oxygen source or even controlling the first or second check valve, if provided. The control unit may further serve to control timed release of oxygen from a prefilled oxygen buffer before initiating chemical oxygen production in the chemical oxygen generator.

Such embodiment may be further improved in that the control unit comprises a ambient pressure sensor for detecting the ambient pressure and is adapted to control the flow of oxygen through the flow control valve depending on the signals of said ambient pressure sensor. Such improved embodiment is able to provide improved control of the oxygen flow to the passenger or crew member by detecting the ambient pressure and controlling the flow control valve in dependency of such ambient pressure.

According to a final preferred embodiment, the oxygen breathing device may be further improved in that the oxygen buffer is connected to said first oxygen flow path via a first check valve adapted to direct oxygen from the chemical oxygen source to the oxygen buffer if the pressure within the first oxygen flow path exceeds a predetermined limit, and via a second check valve adapted to direct oxygen from the oxygen buffer to the first oxygen flow path if the pressure difference between the oxygen buffer and the first oxygen flow path exceeds a predetermined limit, in particular if the pressure in the first oxygen flow path is below the pressure in the oxygen buffer, wherein said first and second check valve are functionally arranged in parallel. In such preferred embodiment, at least one flow path is provided connecting the first oxygen flow path the oxygen buffer. In this flow path, a first and a second check valve are provided in parallel arrangement. By this, oxygen may either flow from the first oxygen flow path via the first check valve to the oxygen buffer or from the oxygen buffer via the second check valve to the first oxygen flow path. The flow of oxygen from the chemical oxygen source via the first oxygen flow path to the oxygen buffer is allowed by the first check valve if the absolute pressure within the first oxygen flow path exceeds a predetermined limit. Such predetermined limit may be set to the minimum pressure required for a safe operation of the flow control valve. The flow of oxygen from the oxygen buffer to the first oxygen flow path may be allowed by the second check valve if a predetermined pressure difference between the oxygen buffer and the first oxygen flow path is exceeded. In particular, such flow may be allowed if the pressure within the first oxygen flow path is below the pressure within the oxygen buffer. However, in an improved embodiment, a flow of oxygen from the oxygen buffer to the first oxygen flow path may only be allowed if the pressure within the first oxygen flow path is below a predetermined limit, e.g. the below minimum pressure required for a safe operation of the flow control valve. It is to be understood that generally oxygen may only flow from the oxygen buffer to the first oxygen flow path if at the same time the pressure within the oxygen buffer is above the pressure within the first oxygen flow path, i.e. the pressure difference of oxygen buffer pressure minus first oxygen flow path pressure must be positive.

According to this invention, the first and second check valve are functionally arranged in parallel. This is to be understood that the first and second check valve may be separate units which are coupled in parallel to each other, thus allowing the oxygen flow to either flow through the first check valve thus bypassing the second check valve or vice versa. However, the first and second check valve may alternatively be provided as one single unit incorporating both functions in a parallel relationship.

According to a further aspect of the invention, a method for providing oxygen to a passenger or crew member of an aircraft is provided, the method comprising the steps of producing oxygen in a chemical reaction within a chemical oxygen source, directing at least a part of said oxygen to an oxygen outflow port, controlling the pressure at the oxygen outflow port by a flow control valve, wherein a part of said oxygen is directed into an oxygen buffer if said oxygen produced within said chemical oxygen source is above the amount required for establishing said pressure at the oxygen outflow port. Such method of providing oxygen allows to supply a passenger or crew member over a long time with oxygen from a particularly light weight oxygen breathing device. Such method avoids any waste of oxygen in case of excessive production of oxygen within a chemical oxygen source. Such method further allows to adapt oxygen flow to different flight profiles like e.g. descending or ascending profiles or flying at constant high or low altitude over a longer period of time.

The method may be further improved by the step of directing oxygen from said oxygen buffer to said oxygen outflow port if the pressure before the flow control valve is below the pressure in the oxygen buffer. By this, a parallel or serial supply of oxygen over time may be accomplished to ensure a long time supply of oxygen to a passenger or crew member.

Still further, the method may be further improved by the step of directing oxygen from said oxygen buffer to said oxygen outflow port if the pressure in said oxygen buffer exceeds a certain value. By this, additional oxygen may be provided to the flow control valve or the flow control valve may even be bypassed to avoid excessive pressure with the system and providing excessive oxygen which may cause such excessive pressure directly to the passenger or crew member.

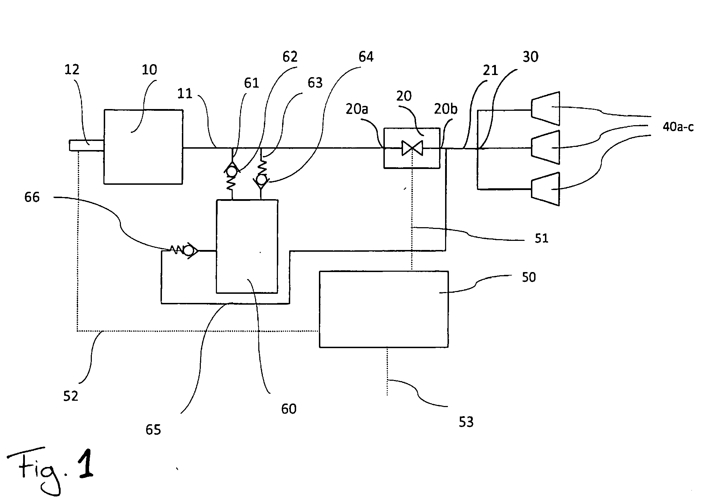

A preferred embodiment of the invention is described referring to the figure, wherein a schematical arrangement of an oxygen breathing device according to the invention is shown.

The oxygen breathing device shown in the figure comprises a chemical oxygen generator 10, which is connected to a flow control valve 20 via a main oxygen tube 11. Oxygen provided to the flow control valve 20 enters the flow control valve at an inlet 20a and exits the flow control valve at an outlet 20b. The outlet is connected to a short oxygen tube 21, which is directing the oxygen from the flow control valve 20 to a manifold 30. The manifold 30 is connected via oxygen hoses to three oxygen masks 40a-c and thus supplies oxygen from the flow control valve 20 to each of the oxygen masks 40a-c.

The flow control valve 20 is coupled to a control unit 50 via a signal line 51. The control unit 50 includes an ambient pressure sensor and controls the flow of oxygen through the flow control valve 20 in an inverse relationship to the ambient pressure. This is to be understood in that the flow of oxygen' through the flow control valve is higher at low ambient pressure and is lower at high ambient pressure detected by the ambient pressure sensor within the control unit 50.

The control unit 50 is further coupled to an electrical starter 12 via a starting signal line 52. By this, the control unit 50 may activate the chemical reaction within the chemical oxygen source 10 by sending an electrical signal to the electrical starter 12.

Still further, the control unit 50 is connected to the electrical system of an aircraft via a signal line 53. This allows activation of the whole oxygen breathing device by an external signal transmitted by the signal line 53.

The oxygen breathing device according to the preferred embodiment shown in the figure further comprises an oxygen buffer pressure tank 60. The oxygen buffer pressure tank 60 is connected to the main oxygen tube 11 via a first oxygen tube 61. The first oxygen tube 61 couples the main oxygen tube 11 with the oxygen buffer pressure tank 60 via a first check valve 62. This first check valve 62 is adapted to allow oxygen flow only in the direction towards the oxygen buffer and is further adapted to open if a predetermined amount of pressure is exceeded in the main oxygen tube 11. This predetermined amount of oxygen pressure is equal to the minimum pressure required for a save operation of the flow control valve 20.

Still further, the oxygen buffer pressure tank 60 is connected to the main oxygen tube 11 via a second oxygen tube 63 which is arranged in parallel to the main oxygen tube 61. The second oxygen tube 63 connects the oxygen buffer pressure tank 60 to the main oxygen tube 11 via a second check valve 64. The second check valve 64 is adapted to allow flow of oxygen only in the direction towards the main oxygen tube 11, i.e. in a direction out of the oxygen buffer pressure tank 60. The second check valve is adapted to open if the pressure within the main oxygen tube 11 is below the pressure within the oxygen buffer pressure tank 60.

Still further, the oxygen buffer pressure tank 60 is connected to the short oxygen tube 21 via an excess pressure line 65. The excess pressure line 65 connects the oxygen buffer pressure tank 60 via a safety check valve 66 with the short oxygen tube 21 and thus directly with the oxygen masks 40a-c. The safety check valve 66 is adapted to open in case that a predetermined pressure within the oxygen buffer pressure tank is exceeded. This predetermined pressure limit is set to the maximum pressure allowed for the oxygen buffer pressure tank.

The method of supplying oxygen to a passenger or crew member works as follows: In case of an emergency, an activating signal is transmitted via signal line 53 to the control unit 50. Control unit 50 then starts the chemical reaction within the chemical oxygen source 10 by sending a respective starting signal to the electrical starter 12 via signal line 52. Following this, control unit 50 controls the flow of oxygen depending on the ambient pressure by sending respective control signals via signal line 51 to the flow control valve 20.

In a first stage of the chemical reaction the oxygen supplied by the chemical oxygen source 10 is sufficient to supply the three passengers wearing the oxygen masks 40a-c. After this first stage a second stage may occur, wherein the chemical oxygen source 10 produces excessive oxygen, i.e. too much oxygen than required for the actual needs of the three passengers supplied by the oxygen breathing device. In such case, the oxygen pressure within the main oxygen tube 11 will increase and the first check valve 61 will open so that oxygen is both supplied to the flow control valve 20 and the passengers via oxygen masks 40a-c and the oxygen buffer pressure tank 60. Thus, the oxygen buffer pressure tank is filled with excessive oxygen in this second stage.

In case that the oxygen buffer pressure tank 60 is completely filled and the pressure within the main oxygen tube 11 is still above the pressure allowed for the oxygen buffer pressure tank 60, the safety check valve 66 will open and oxygen will flow through the excessive pressure line 65 directly towards the oxygen masks 40a-c. In this case, which is usually only present in outstanding conditions for short time, the passengers may be supplied with more oxygen than required for their actual needs.

In a subsequent third stage, the chemical reaction within the chemical oxygen source 10 may produce less oxygen than required by the passengers. In this case, the pressure within the main oxygen tube 11 will decrease and the first check valve 62 will shut off. As soon as the pressure within the main oxygen tube 11 is below the pressure within the oxygen buffer pressure tank 60, the second check valve 64 will open thus allowing oxygen to flow from the oxygen buffer pressure tank to the flow control valve 20. In this third stage, the passengers are supplied with oxygen from the chemical oxygen source 10 and the oxygen buffer pressure tank 60 simultaneously.

In a subsequent fourth stage, the chemical reaction within the chemical oxygen source 10 may be terminated, i.e. the chemical oxygen source 10 does not produce any oxygen anymore. In this stage, the passengers at oxygen masks 40a-c are provided with oxygen from the oxygen buffer pressure tank 60 only.

## Claims

1. An oxygen breathing device, in particular for providing oxygen to passenger or crew of an aircraft, the device comprising:
- a chemical oxygen source (10), wherein oxygen is stored in chemically bound form,
- a first oxygen flow path (11) connecting the chemical oxygen source to a flow control valve and a second oxygen flow path (21) connecting the flow control valve to at least one oxygen outflow port,
- wherein the flow control valve is adapted to control the oxygen pressure at the oxygen outflow port,
- an oxygen buffer (60)
**characterized in that** said oxygen buffer (60) is connected to said first oxygen flow path (11) via a first check valve (62) adapted to direct oxygen from the chemical oxygen source (10) to the oxygen buffer (60) if the pressure within the first oxygen flow path (11) and/or the pressure difference between the oxygen buffer (60) and the first oxygen flow path (11) exceeds a predetermined limit.

2. The oxygen breathing device according to claim 1, wherein said oxygen buffer is a pressure tank (60).

3. The oxygen breathing device according to claim 1 or 2, wherein said first check valve (62) is adapted to shut off if the pressure within the oxygen buffer (60) exceeds a certain limit.

4. The oxygen breathing device according to any of the preceding claims, wherein said oxygen buffer (60) is connected to said first oxygen flow path (11) via a second check valve (64) adapted to direct oxygen from the oxygen buffer (60) to the first oxygen flow path (11) if the pressure within the first oxygen flow path and/or the pressure difference between the oxygen buffer and the first oxygen flow path is below a predetermined limit.

5. The oxygen breathing device according to any of the preceding claims, wherein said oxygen buffer is connected to said second oxygen flow path (21) via a safety check valve (66) adapted to direct oxygen from the oxygen buffer (60) to the second oxygen flow path (21) if the pressure within the oxygen buffer exceeds a predetermined limit.

6. The oxygen breathing device according to any of the preceding claims, wherein a control unit (50) is provided for controlling the flow control valve (20).

7. The oxygen breathing device according to claim 6, wherein the control unit comprises an ambient pressure sensor for detecting the ambient pressure and is adapted to control the flow of oxygen through the flow control valve (20) depending on the signals of said ambient pressure sensor.

8. The oxygen breathing device according to claim 4, wherein said second check valve (64) is adapted to direct oxygen from the oxygen buffer to the first oxygen flow path if the pressure in the first oxygen flow path is below the pressure in the oxygen buffer,
wherein said first and second check valve are functionally arranged in parallel.

9. The oxygen breathing device according to any of the preceding claims wherein said oxygen buffer is partly or completely filled with oxygen in the state as delivered.

10. A method for providing oxygen to a passenger or crew member of an aircraft, comprising the steps of:
- producing oxygen in a chemical reaction within a chemical oxygen source,
- directing at least a part of said oxygen to an oxygen outflow port,
- controlling the pressure at the oxygen outflow port by a flow control valve,
**characterized in that** a part of said oxygen is directed into an oxygen buffer if said oxygen produced within said chemical oxygen source is above the amount required for providing establishing said pressure at the oxygen outflow port.

11. The method according to claim 10, further comprising the steps of:
directing oxygen from said oxygen buffer to said oxygen outflow port if the pressure before the flow control valve is below the pressure in the oxygen buffer.

12. The method according to claim 10 or 11, further comprising the steps of:
directing oxygen from said oxygen buffer to said oxygen outflow port if the pressure in said oxygen buffer exceeds a certain value.

## Patentansprüche

1. Sauerstoffbeatmungsvorrichtung, insbesondere zum Bereitstellen von Sauerstoff für einen Passagier oder eine Besatzung eines Flugzeugs, umfassend:
- eine chemische Sauerstoffquelle (10), in der Sauerstoff in chemisch gebundener Form gespeichert ist,
- einen ersten Sauerstoffflusspfad (11), welcher die chemische Sauerstoffquelle mit einem Flusssteuerungsventil verbindet, und einen zweiten Sauerstoffflusspfad (21), welcher das Flusssteuerungsventil mit wenigstens einer Sauerstoffausflussmündung verbindet,
- wobei das Flusssteuerungsventil zum Steuern des Sauerstoffdrucks an der Sauerstoffausflussmündung ausgebildet ist,
- einen Sauerstoffspeicher (60),
**dadurch gekennzeichnet, dass** der Sauerstoffspeicher (60) mit dem ersten Sauerstoffflusspfad (11) mittels eines ersten Sperrventils (62) verbunden ist, welches ausgebildet ist zum Führen von Sauerstoff von der chemischen Sauerstoffquelle (10) zu dem Sauerstoffspeicher (60), falls der Druck innerhalb des ersten Sauerstoffflusspfads (11) und/oder die Druckdifferenz zwischen dem Sauerstoffspeicher (60) und dem ersten Sauerstoffflusspfad (11) eine vorgegebene Grenze überschreitet.

2. Sauerstoffbeatmungsvorrichtung nach Anspruch 1, wobei der Sauerstoffspeicher ein Druckbehälter (60) ist.

3. Sauerstoffbeatmungsvorrichtung nach Anspruch 1 oder 2, wobei das Sperrventil (62) zum Absperren ausgebildet ist, falls der Druck innerhalb des Sauerstoffspeichers (60) eine bestimmte Grenze überschreitet.

4. Sauerstoffbeatmungsvorrichtung nach einem der vorstehenden Ansprüche, wobei der Sauerstoffspeicher (60) mit einem ersten Sauerstoffflusspfad (11) mittels eines zweiten Sperrventils (64) verbunden ist, welches ausgebildet ist zum Führen von Sauerstoff von dem Sauerstoffspeicher (60) zu dem ersten Sauerstoffflusspfad (11), falls der Druck innerhalb des ersten Sauerstoffflusspfads und/oder die Druckdifferenz zwischen dem Sauerstoffspeicher und dem ersten Sauerstoffflusspfad unterhalb einer vorgegebenen Grenze ist.

5. Sauerstoffbeatmungsvorrichtung nach einem der vorstehenden Ansprüche, wobei der Sauerstoffspeicher mit dem zweiten Sauerstoffflusspfad (21) mittels eines Sicherheitssperrventils (66) verbunden ist, welches ausgebildet ist zum Führen von Sauerstoff von dem Sauerstoffspeicher (60) zu dem zweiten Sauerstoffflusspfad (21), falls der Druck innerhalb des Sauerstoffspeichers eine vorgegebene Grenze überschreitet.

6. Sauerstoffbeatmungsvorrichtung nach einem der vorstehenden Ansprüche, wobei eine Steuerungseinheit (50) vorgesehen ist zum Steuern des Flusssteuerungsventils (20).

7. Sauerstoffbeatmungsvorrichtung nach Anspruch 6, wobei die Steuerungseinheit einen Umgebungsdrucksensor zum Erfassen des Umgebungsdrucks umfasst und ausgebildet ist zum Steuern des Sauerstoffflusses durch das Flusssteuerungsventil (20) in Abhängigkeit der Signale des Umgebungsdrucksensors.

8. Sauerstoffbeatmungsvorrichtung nach Anspruch 4, wobei das zweite Sperrventil (64) ausgebildet ist zum Führen von Sauerstoff von dem Sauerstoffspeicher zu dem ersten Sauerstoffflusspfad, falls der Druck in dem ersten Sauerstoffflusspfad unterhalb des Drucks in dem Sauerstoffspeicher liegt,
wobei das erste und zweite Sperrventil funktionell parallel zueinander angeordnet sind.

9. Sauerstoffbeatmungsvorrichtung nach einem der vorstehenden Ansprüche, wobei der Sauerstoffspeicher im Lieferungszustand teilweise oder komplett mit Sauerstoff gefüllt ist.

10. Verfahren zum Bereitstellen von Sauerstoff für einen Passagier oder ein Besatzungsmitglied eines Flugzeugs, umfassend die Schritte:
- Erzeugen von Sauerstoff in einer chemischen Reaktion innerhalb einer chemischen Sauerstoffquelle,
- Führen zumindest eines Teils des Sauerstoffs zu einer Sauerstoffabflussmündung,
- Steuern des Drucks an der Sauerstoffabflussmündung mittels eines
Flusssteuerungsventils,
**dadurch gekennzeichnet, dass** ein Teil des Sauerstoffs in einen Sauerstoffspeicher geführt wird, falls der Sauerstoff, welcher innerhalb der chemischen Sauerstoffquelle erzeugt wurde, die Menge übersteigt, welche zum Bereitstellen des Druckaufbaus an der Sauerstoffabflussmündung benötigt wird.

11. Verfahren nach Anspruch 10, weiter umfassend die Schritte:
Führen des Sauerstoffs von dem Sauerstoffspeicher zu der Sauerstoffabflussmündung, falls der Druck vor dem Flusssteuerungsventil unterhalb des Drucks in dem Sauerstoffspeicher ist.

12. Verfahren nach Anspruch 10 oder 11, weiter umfassend die Schritte:
Führen des Sauerstoffs von dem Sauerstoffspeicher zu der Sauerstoffabflussmündung, falls der Druck in dem Sauerstoffspeicher einen bestimmten Wert überschreitet.

## Revendications

1. Dispositif respiratoire à oxygène, destiné en particulier à fournir de l'oxygène à un passager ou membre d'équipage d'un avion, le dispositif comprenant :
- une source d'oxygène chimique (10), dans laquelle l'oxygène est stocké sous forme liée chimiquement,
- une première voie d'acheminement d'oxygène (11) reliant la source d'oxygène chimique à une vanne de régulation de débit et une deuxième voie d'acheminement d'oxygène (21) reliant la vanne de régulation de débit à au moins un orifice d'écoulement d'oxygène,
- dans lequel la vanne de régulation de débit est conçue pour réguler la pression d'oxygène au niveau de l'orifice d'écoulement d'oxygène,
- un réservoir tampon de l'oxygène (60)
**caractérisé en ce que** ledit réservoir tampon de l'oxygène (60) est raccordé à ladite première voie d'acheminement d'oxygène (11) via un premier clapet anti-retour (62) conçu pour diriger l'oxygène de la source d'oxygène chimique (10) vers le réservoir tampon de l'oxygène (60) si la pression à l'intérieur de la première voie d'acheminement d'oxygène (11) et/ou la différence de pression entre le réservoir tampon de l'oxygène (60) et la première voie d'acheminement d'oxygène (11) excède une limite prédéterminée.

2. Dispositif respiratoire à oxygène selon la revendication 1, dans lequel ledit réservoir tampon de l'oxygène est un réservoir sous pression (60).

3. Dispositif respiratoire à oxygène selon la revendication 1 ou 2, dans lequel ledit premier clapet anti-retour (62) est conçu pour se fermer si la pression à l'intérieur du réservoir tampon de l'oxygène (60) excède une certaine limite.

4. Dispositif respiratoire à oxygène selon l'une quelconque des revendications précédentes, dans lequel ledit réservoir tampon de l'oxygène (60) est raccordé à ladite première voie d'acheminement d'oxygène (11) via un deuxième clapet anti-retour (64) conçu pour diriger l'oxygène du réservoir tampon de l'oxygène (60) vers la première voie d'acheminement de l'oxygène (11) si la pression à l'intérieur de la première voie d'acheminement d'oxygène et/ou la différence de pression entre le réservoir de tampon de l'oxygène et la première voie d'acheminement d'oxygène est en dessous d'une limite prédéterminée.

5. Dispositif respiratoire à oxygène selon l'une quelconque des revendications précédentes, dans lequel ledit réservoir tampon de l'oxygène est raccordé à ladite deuxième voie d'acheminement de l'oxygène (21) via un clapet anti-retour de sécurité (66) conçu pour diriger l'oxygène du réservoir tampon de l'oxygène (60) vers la deuxième voie d'acheminement d'oxygène (21) si la pression à l'intérieur du réservoir tampon de l'oxygène excède une limite prédéterminée.

6. Dispositif respiratoire à oxygène selon l'une quelconque des revendications précédentes, dans lequel une unité de contrôle (50) est prévue pour contrôler la vanne de régulation de débit (20).

7. Dispositif respiratoire à oxygène selon la revendication 6, dans lequel l'unité de contrôle comprend un capteur de pression ambiante pour détecter la pression ambiante et est conçue pour contrôler le débit d'oxygène à travers la vanne de régulation de débit (20) en fonction des signaux dudit capteur de pression ambiante.

8. Dispositif respiratoire à oxygène selon la revendication 4, dans lequel ledit deuxième clapet anti-retour (64) est conçu pour diriger l'oxygène du réservoir tampon de l'oxygène vers la première voie d'acheminement d'oxygène si la pression dans la première voie d'acheminement d'oxygène est en dessous de la pression dans le réservoir tampon de l'oxygène,
dans lequel lesdits premier et deuxième clapets anti-retour sont fonctionnellement disposés en parallèle.

9. Dispositif respiratoire à oxygène selon l'une quelconque des revendications précédentes, dans lequel ledit réservoir tampon de l'oxygène est partiellement ou complètement rempli avec de l'oxygène dans l'état dans lequel il est fourni.

10. Procédé de fourniture d'oxygène à un passager ou membre d'équipage d'un avion, comprenant les étapes consistant à :
- produire de l'oxygène par réaction chimique à l'intérieur d'une source d'oxygène chimique,
- diriger au moins une partie dudit oxygène vers un orifice d'écoulement d'oxygène,
- réguler la pression au niveau de l'orifice d'écoulement d'oxygène au moyen d'une vanne de régulation de débit,
**caractérisé en ce qu'**une partie dudit oxygène est dirigée dans un réservoir tampon de l'oxygène si ledit oxygène produit à l'intérieur de ladite source d'oxygène chimique est au-dessus de la quantité requise pour permettre l'établissement de ladite pression au niveau de l'orifice d'écoulement de l'oxygène.

11. Procédé selon la revendication 10, comprenant en outre les étapes consistant à :
diriger l'oxygène dudit réservoir tampon de l'oxygène vers ledit orifice d'écoulement d'oxygène si la pression avant la vanne de régulation de débit est en dessous de la pression dans le réservoir tampon de l'oxygène.

12. Procédé selon la revendication 10 ou 11, comprenant en outre les étapes consistant à :
diriger l'oxygène dudit réservoir tampon de l'oxygène vers ledit orifice d'écoulement d'oxygène si la pression dans ledit réservoir tampon de l'oxygène excède une certaine valeur.
